# EUROPEAN PATENT APPLICATION

(11) **EP 4 099 612 A1**
(43) Date of publication of application: **07.12.2022**
(21) Application number: 21748122.5
(22) Date of filing: 21.01.2021
(51) Int. Cl.: H04L 9/08, H04L 9/32

(54) **CONTROL METHOD, SERVER, AND PROGRAM**

(30) Priority: 31.01.2020 US 202062968425 P
(71) Applicant: Panasonic Intellectual Property Corporation of America, Torrance, CA 90504 (US)
(72) Inventor: NISHIDA, Naohisa, Osaka-shi, Osaka 540-6207 (JP); UNAGAMI, Yuji, Osaka-shi, Osaka 540-6207 (JP)
(74) Representative: Novagraaf International SA
(86) International application number: PCT/JP2021/002084
(87) International publication number: WO 2021/153421

(57) **Abstract**

A control method is to be executed by one of a plurality of servers included in an information management system. Each of the plurality of servers owns a distributed ledger. The control method includes: receiving transaction data including a signature generated using any of a plurality of signing keys owned by a user (S101), each of the plurality of signing keys being associated with a reliability; determining whether the reliability associated with the signature included in the transaction data received is higher than or equal to a specified value (S103); storing the transaction data in the distributed ledger (S104), if reliability is determined to be higher than or equal to the specified value in the determining; and executing invalidation processing to invalidate the transaction data (S121), if the reliability is determined to be lower than the specified value in the determining.

## Description

### [Technical Field]

The present invention relates to a control method, a server, and a program.

### [Background Art]

There is a technique of managing information in a distributed ledger. The distributed ledger stores transaction data including the information to be managed and an electronic signature (also simply referred to as a "signature") generated for the information.

### [Citation List]

### [Patent Literature]

[PTL 1]
Japanese Unexamined Patent Application Publication No. 2019-184908

### [Summary of Invention]

### [Technical Problem]

The present invention provides a control method, for example, of managing information in a distributed ledger at a higher reliability.

### [Solution to Problem]

A control method according to an aspect of the present invention is to be executed by one of a plurality of servers included in an information management system. Each of the plurality of servers owns a distributed ledger. The control method includes: receiving transaction data including a signature generated using any signing key of a plurality of signing keys owned by a user, each of the plurality of signing keys being associated with a reliability; determining whether the reliability associated with the signing key used to generate the signature included in the transaction data received is higher than or equal to a specified value; storing the transaction data in the distributed ledger, if the reliability is determined to be higher than or equal to the specified value in the determining; and executing invalidation processing to invalidate the transaction data, if the reliability is determined to be lower than the specified value in the determining.

Note that the general or specific aspect may be implemented using a system, a device, an integrated circuit, a computer program, or a computer-readable recording medium such as a CD-ROM, or any combination of systems, devices, integrated circuits, computer programs, or recording media.

### [Advantageous Effects of Invention]

The control method according to the present invention manages information in a distributed ledger at a higher reliability.

### [Brief Description of Drawings]

[FIG. 1]

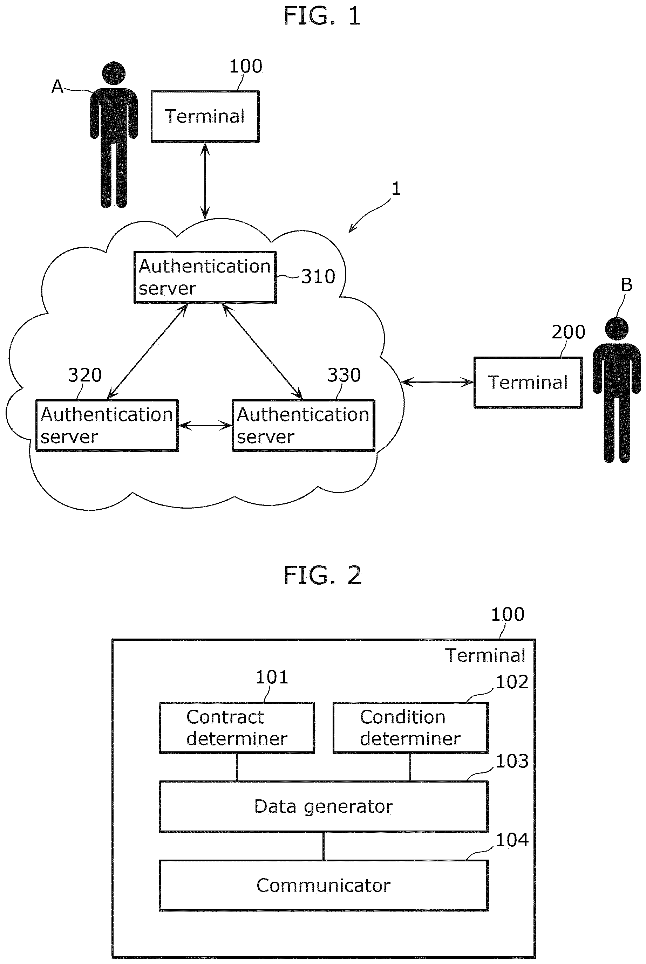

   FIG. 1 is a block diagram schematically showing a configuration of an information management system according to Embodiment 1.
[FIG. 2]
   FIG. 2 is a block diagram showing a functional configuration of a terminal according to a first example of Embodiment 1.
[FIG. 3]

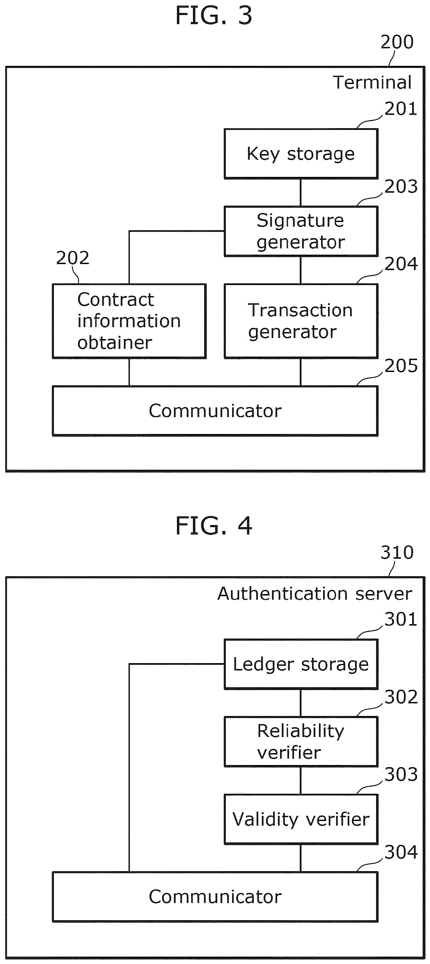

   FIG. 3 is a block diagram showing a functional configuration of a terminal according to a second example of Embodiment 1.
[FIG. 4]
   FIG. 4 is a block diagram showing an example functional configuration of an authentication server according to Embodiment 1.
[FIG. 5]

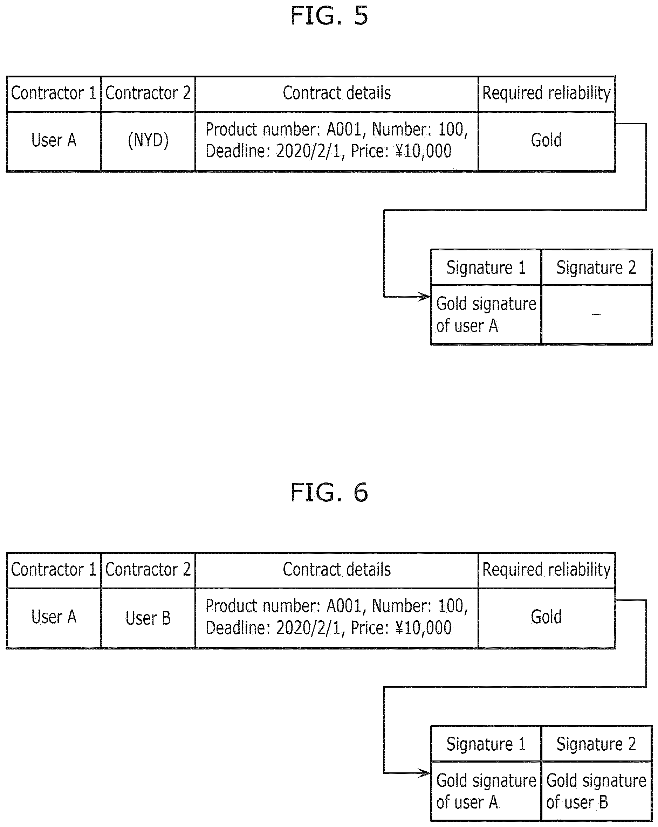

   FIG. 5 illustrates example contract data according to Embodiment 1.
[FIG. 6]
   FIG. 6 illustrates example contract transaction data according to Embodiment 1.
[FIG. 7]

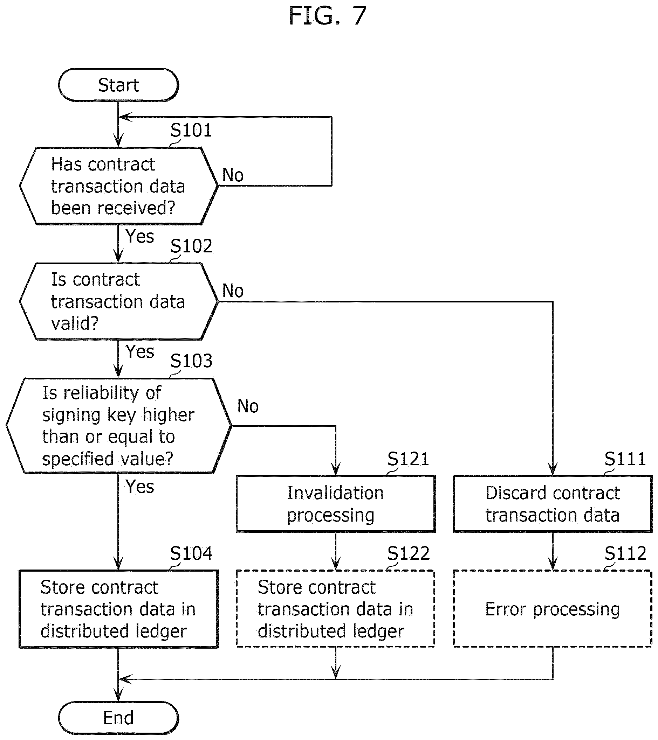

   FIG. 7 is a flowchart showing processing of the authentication server according to Embodiment 1.
[FIG. 8]

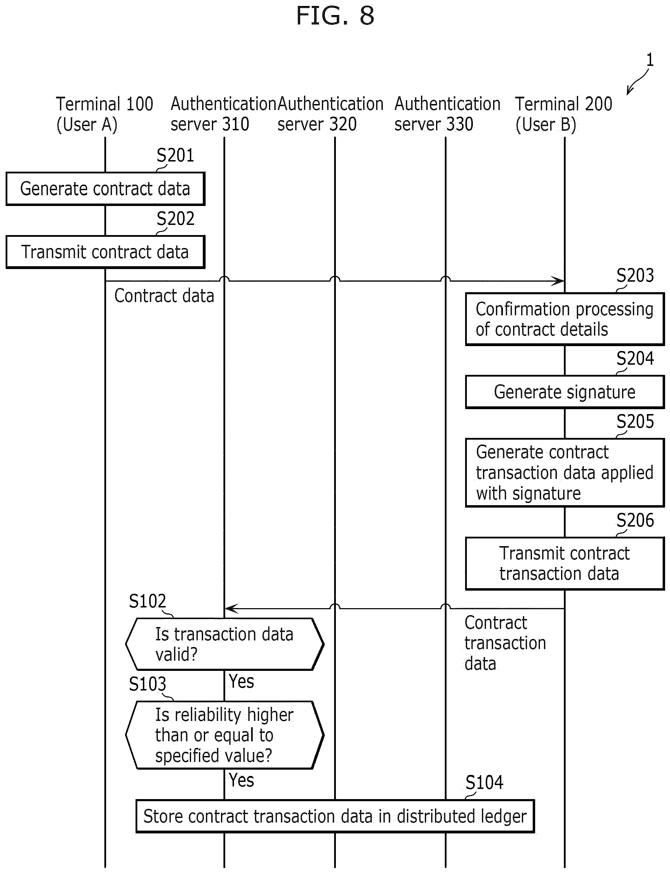

   FIG. 8 is a sequence diagram showing processing of the information management system according to Embodiment 1.
[FIG. 9]

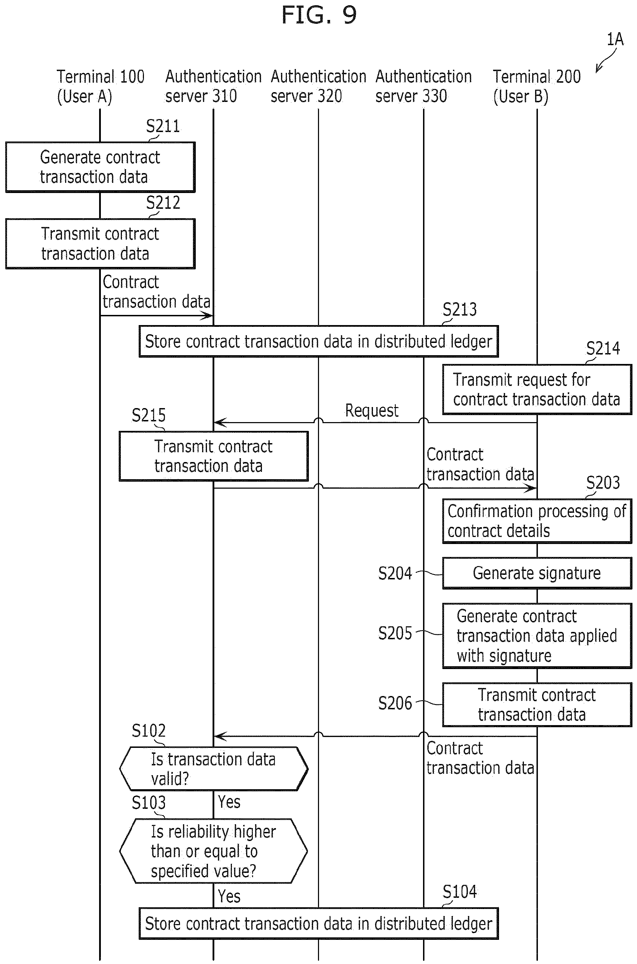

   FIG. 9 is a sequence diagram showing processing of an information management system according to a variation of Embodiment 1.
[FIG. 10]

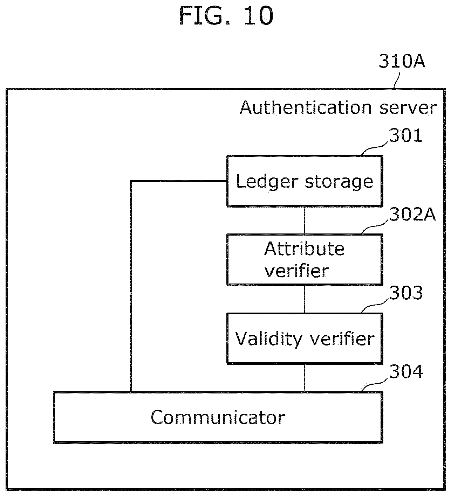

   FIG. 10 is a block diagram showing an example functional configuration of an authentication server according to Embodiment 2.
[FIG. 11]

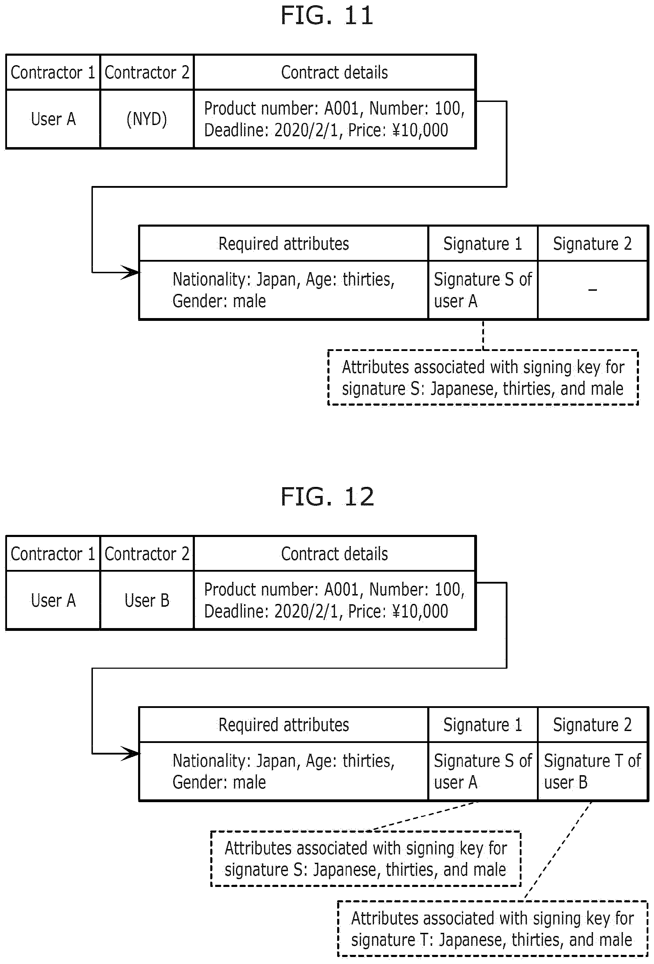

   FIG. 11 illustrates example contract data according to Embodiment 2.
[FIG. 12]
   FIG. 12 illustrates example contract transaction data according to Embodiment 2.
[FIG. 13]

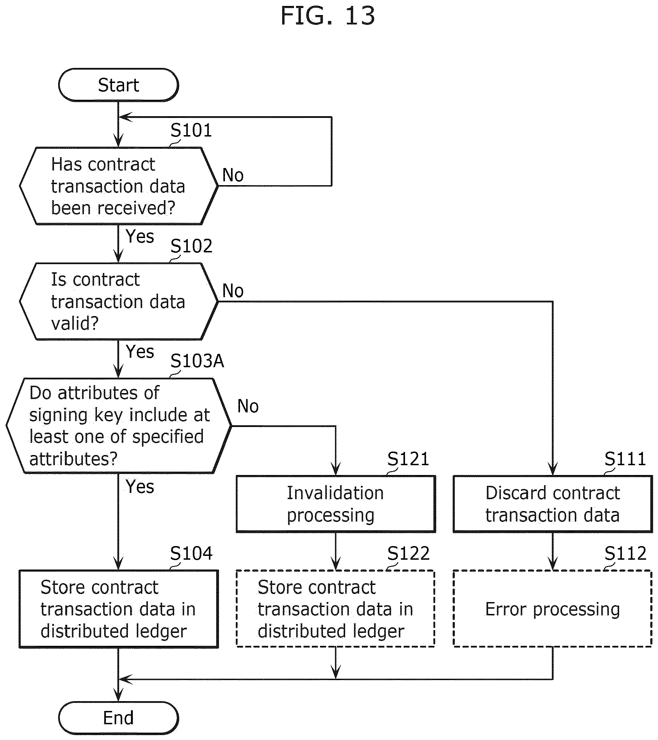

   FIG. 13 is a flowchart showing processing of the authentication server according to Embodiment 2.
[FIG. 14]

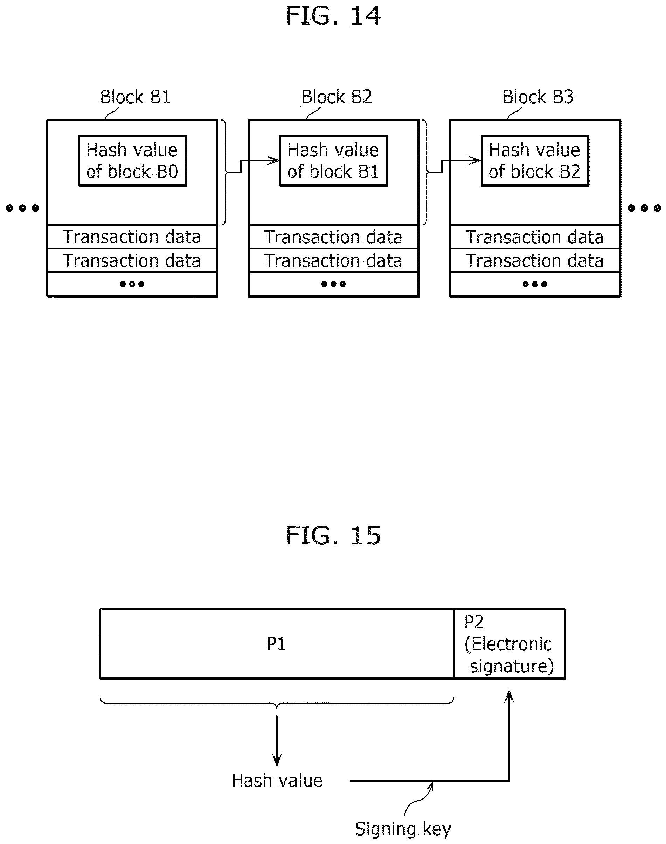

   FIG. 14 illustrates a data structure of a blockchain.
[FIG. 15]
   FIG. 15 illustrates a data structure of transaction data.

### [Description of Embodiments]

### (Underlying Knowledge Forming Basis of the Present Disclosure)

The present inventors have found that the technique of managing information described above in the "Background Art" has the following problems.

There is a technique of managing information in a distributed ledger. The distributed ledger stores transaction data including the information to be managed and an electronic signature (also simply referred to as a "signature") generated for the information to manage the data such that falsification is substantially impossible.

The signature is generated through calculation on the information to be managed, using a signing key of a user. Each user freely generates a signing key of the user and gives and takes the signing key under an agreement between users. Accordingly, a user can own a signing key of another user and generate a signature to be applied to transaction data, while impersonating the other user.

The signature applied to the information managed in a distributed ledger has a lower reliability as to whether the signer who has applied the signature is certainly the user himself/herself.

The present invention provides a control method, for example, that manages information in a distributed ledger at a higher reliability.

A control method according to an aspect of the present invention is to be executed by one of a plurality of servers included in an information management system. Each of the plurality of servers owns a distributed ledger. The control method includes: receiving transaction data including a signature generated using any signing key of a plurality of signing keys owned by a user, each of the plurality of signing keys being associated with a reliability; determining whether the reliability associated with the signing key used to generate the signature included in the transaction data received is higher than or equal to a specified value; storing the transaction data in the distributed ledger, if the reliability is determined to be higher than or equal to the specified value in the determining; and executing invalidation processing to invalidate the transaction data, if the reliability is determined to be lower than the specified value in the determining.

In this aspect, the reliability of the user who has applied the signature is estimated based on the reliability of the signing key used to generate the signature included in transaction data. Using the estimated reliability, whether to store the transaction data in the distributed ledger or invalidate the transaction data is controlled. If the reliability of the signing key is higher than or equal to the specified value, the transaction data is stored in the distributed ledger. On the other hand, if not, the transaction data is invalidated. Accordingly, relatively highly reliable transaction data can be stored in the distributed ledger. In this manner, the control method described above allows management of information in the distributed ledger at a higher reliability.

The specified value may indicate a required reliability that is a reliability required for the signing key used to generate the signature and determined by a requesting user who is another user requesting the user to apply a signature. The transaction data may further include the required reliability.

In this aspect, relatively highly reliable transaction data can be stored in the distributed ledger using, as the specified value, the required reliability determined by the requesting user. Accordingly, the control method described above more easily allows the management of information in the distributed ledger at a higher reliability.

The specified value may indicate a reliability determined in advance in accordance with a content of the transaction data.

In this aspect, relatively highly reliable transaction data can be stored in the distributed ledger using, as the specified value, the reliability determined in advance in accordance with the content of the transaction data. Accordingly, the control method described above more easily allows the management of information in the distributed ledger at a higher reliability.

The invalidation processing may include processing of adding invalidation information indicating that the transaction data is invalid to the transaction data, and storing, in the distributed ledger, the transaction data to which the invalidation information is added.

In this aspect, the transaction data, in which the signing key used to generate the signature has a reliability lower than the specified value, is stored in the distributed ledger with invalidation information added thereto. In addition, relatively highly reliable transaction data is, as valid transaction data, stored in the distributed ledger. In this manner, the transaction data can be stored and managed in the distributed ledger in both the following cases. The reliability of the signing key is higher than or equal to the specified value in one case, whereas the reliability is lower than the specified value in the other case. Accordingly, the control method described above allows management of all the transaction data in the distributed ledger at a higher reliability.

The invalidation processing may include processing of discarding the transaction data without storing the transaction data in the distributed ledger.

In this aspect, the transaction data is discarded in which the signing key used to generate the signature has a reliability lower than the specified value. In addition, relatively highly reliable transaction data is, as valid transaction data, stored in the distributed ledger. In this manner, the transaction data in which the signing key has a reliability lower than the specified value, is not stored in the distributed ledger. The storage capacity of the storage device storing the distributed ledger is thus less increased. Accordingly, the control method described above allows management of information in the distributed ledger at a higher reliability, requiring a lower storage capacity of the storage device.

When the transaction data has been received, verification processing of the transaction data may be executed using the signature included in the transaction data received. The determining may be performed when verification has been successfully made in the verification processing.

In this aspect, the reliability of the signing key used to generate the signature is determined with respect to the transaction data including the successfully verified signature. It is then clarified that the transaction data is neither falsified nor destroyed. Accordingly, the control method described above allows management of information in the distributed ledger at a higher reliability, without any falsification.

The transaction data may further include a signature of the requesting user. When the transaction data has been received, verification processing of the transaction data may be executed using the signature of the requesting user and the signature of the user included in the transaction data received. The determining may be performed when verification has been successfully made in the verification processing.

In this aspect, with respect to the transaction data including a plurality of successfully verified signatures, the reliabilities of the signing keys used to generate the signatures are determined. It is then clarified that the transaction data is neither falsified nor destroyed and that the plurality of users have checked the content of the transaction data. Accordingly, the control method described above allows management of information in the distributed ledger at a higher reliability, while the content is checked by the users.

A control method according to an aspect of the present invention is to be executed by one of a plurality of servers included in an authentication system. Each of the plurality of servers owns a distributed ledger. The control method includes: receiving transaction data including a signature generated using a signing key owned by a user and associated with one or more attributes; determining whether the one or more attributes associated with the signing key used to generate the signature included in the transaction data received include at least one of one or more predetermined specified attributes; storing the transaction data in the distributed ledger, if the one or more attributes are determined to include the at least one of the one or more predetermined specified attributes in the determining; and executing invalidation processing to invalidate the transaction data, if the one or more attributes are determined not to include the at least one of the one or more predetermined specified attributes in the determining.

In this aspect, the reliability of the user who has applied the signature is estimated based on the attributes of the signing key used to generate the signature included in transaction data. Using the estimated reliability, whether to store the transaction data in the distributed ledger or invalidate the transaction data is controlled. If the attributes of the signing key include at least one of the specified attributes, the transaction data is stored in the distributed ledger. On the other hand, if not, the transaction data is invalidated. Accordingly, relatively highly reliable transaction data can be stored in the distributed ledger. In this manner, the control method described above allows management of information in the distributed ledger at a higher reliability.

The determining may include: determining whether the one or more attributes associated with the signing key used to generate the signature included in the transaction data received include all the one or more predetermined specified attributes; storing the transaction data in the distributed ledger, if the one or more attributes are determined to include all the one or more predetermined specified attributes; and executing invalidation processing to invalidate the transaction data, if the one or more attributes are determined not to include all the one or more predetermined specified attributes.

In this aspect, if the attributes of the signing key include all the specified attributes, the transaction data is stored in the distributed ledger. On the other hand, if not, the transaction data is invalidated. Accordingly, relatively highly reliable transaction data can be stored in the distributed ledger. In this manner, the control method described above allows management of information in the distributed ledger at a higher reliability.

The one or more predetermined specified attributes may include a required attribute that is an attribute required for the signature and determined by a requesting user who is another user requesting the user to apply a signature. The transaction data may further include the required attribute.

In this aspect, relatively highly reliable transaction data can be stored in the distributed ledger using, as one of the specified attributes, the required attribute determined by the requesting user. Accordingly, the control method described above more easily allows the management of information in the distributed ledger at a higher reliability.

The one or more predetermined specified attributes may include an attribute determined in advance in accordance with a content of the transaction data.

In this aspect, relatively highly reliable transaction data can be stored in the distributed ledger using, as one of the specified attributes, the attribute determined in advance in accordance with the content of the transaction data. Accordingly, the control method described above more easily allows the management of information in the distributed ledger at a higher reliability.

The invalidation processing may include processing of adding invalidation information indicating that the transaction data is invalid to the transaction data, and storing, in the distributed ledger, the transaction data to which the invalidation information is added.

In this aspect, the transaction data, in which the attributes of the signing key used to generate the signature do not include at least one of the specified attributes, is stored in the distributed ledger with invalidation information added thereto. In addition, the transaction data in which the attributes of the signature include at least one of the specified attributes is, as valid transaction data, stored in the distributed ledger. In this manner, the transaction data can be stored and managed in the distributed ledger in both the following cases. The attributes of the signing key include at least one of the specified attributes in one case, whereas the attributes of the signing key do not include at least one of the specified attributes in the other case. Accordingly, the control method described above allows management of all the transaction data in the distributed ledger at a higher reliability.

The invalidation processing may include processing of discarding the transaction data without storing the transaction data in the distributed ledger.

In this aspect, the transaction data is discarded in which attributes of the signing key used to generate the signature do not include at least one of specified attributes. In addition, the transaction data in which the attributes of the signature include at least one of the specified attributes is, as valid transaction data, stored in the distributed ledger. In this manner, the transaction data, in which the attributes of the signing key do not include at least one of the specified attributes, is stored in the distributed ledger. The storage capacity of the storage device storing the distributed ledger is thus less increased. Accordingly, the control method described above allows management of information in the distributed ledger at a higher reliability, requiring a lower storage capacity of the storage device.

When the transaction data has been received, verification processing of the transaction data may be executed using the signature included in the transaction data received. The determining may be performed when verification has been successfully made in the verification processing.

In this aspect, the attributes of the signing key used to generate the signature are determined with respect to the transaction data including the successfully verified signature. It is then clarified that the transaction data is neither falsified nor destroyed. Accordingly, the control method described above allows management of information in the distributed ledger at a higher reliability, without any falsification.

The transaction data may further include a signature of the requesting user. When the transaction data has been received, verification processing of the transaction data may be executed using the signature of the requesting user and the signature of the user included in the transaction data received. The determining may be performed when verification has been successfully made in the verification processing.

In this aspect, with respect to the transaction data including a plurality of successfully verified signatures, the attributes of the signing keys used to generate the signatures are determined. It is then clarified that the transaction data is neither falsified nor destroyed. The plurality of users have checked the content of transaction data. Accordingly, the control method described above allows management of information in the distributed ledger at a higher reliability, while the content is checked by the users.

A server according to an aspect of the present invention is one of a plurality of servers included in an authentication system. Each of the plurality of servers owns a distributed ledger. The server includes: a ledger storage that stores the distributed ledger; and a reliability verifier. The reliability verifier: receives transaction data including a signature generated using any signing key of a plurality of signing keys owned by a user, each of the plurality of signing keys being associated with a reliability; determines whether the reliability associated with the signing key used to generate the signature included in the transaction data received is higher than or equal to a specified value; stores the transaction data in the distributed ledger, if the reliability is determined to be higher than or equal to the specified value in the determining; and executes invalidation processing to invalidate the transaction data, if the reliability is determined to be lower than the specified value in the determining.

This aspect provides the same or similar advantages as the control method described above.

A server according to another aspect of the present invention is one of a plurality of servers included in an information management system. Each of the plurality of servers owns a distributed ledger. The server includes: a ledger storage that stores the distributed ledger; and an attribute verifier. The attribute verifier: receives transaction data including a signature generated using a signing key owned by a user and associated with one or more attributes; determines whether the one or more attributes associated with the signing key used to generate the signature included in the transaction data received include at least one of one or more predetermined specified attributes; stores the transaction data in the distributed ledger, if the one or more attributes are determined to include the at least one of the one or more predetermined specified attributes in the determining; and executes invalidation processing to invalidate the transaction data, if the one or more attributes are determined not to include the at least one of the one or more predetermined specified attributes in the determining.

This aspect provides the same or similar advantages as the control method described above.

A program according to an aspect of the present invention causes a computer to execute the control method described above.

This aspect provides the same or similar advantages as the control method described above.

Note that theses general or specific aspects may be implemented using a system, a device, an integrated circuit, a computer program, or a computer-readable recording medium such as a CD-ROM, or any combination of systems, devices, integrated circuits, computer programs, or recording media.

Now, embodiments will be described in detail with reference to the drawings.

Note that the embodiments described below are mere comprehensive or specific examples. The numerical values, shapes, materials, constituent elements, the arrangement and connection of the constituent elements, steps, step orders etc. shown in the following embodiments are mere examples, and are not intended to limit the scope of the present invention. Among the constituent elements in the following embodiments, those not recited in any of the independent claims defining the broadest concept of the present invention are described as optional constituent elements.

### [Embodiment 1]

In this embodiment, an information management system that manages information in a distributed ledger at a higher reliability, and the control method, for example, of the system will be described.

FIG. 1 is a block diagram schematically showing a configuration of information management system 1 according to this embodiment.

Information management system 1 manages various information in a distributed ledger.

Here, an example will be described where the information managed by information management system 1 relates to a sales contract between users A and B.

As shown in FIG. 1, information management system 1 includes authentication servers 310, 320, and 330.

Authentication server 310 is a server device that manages the information related to a sales contract in a distributed ledger. Authentication server 310 is one of a plurality of servers each including a distributed ledger. The distributed ledger of authentication server 310 stores transaction data (also referred to as "contract transaction data") including the information related to the sales contract. The contract transaction data includes a signature applied using a signing key associated with a reliability. The processing or reliability of authentication server 310, and a data structure of contract transaction data will be described later in detail.

Like authentication server 310, each of authentication servers 320 and 330 is a server device that manages information related to a sales contract in a distributed ledger, and operates independently from authentication server 310.

Authentication servers 310, 320, and 330 (also referred to as "authentication server 310 and others") may be communicatively connected to each other and physically located in any positions. Authentication server 310 and others may be owned or managed by a single operator or person or by a plurality of operators or people.

While an example will be described where the number of authentication server 310 and others is three, the number may be more.

Terminal 100 is an information terminal owned by user A. Terminal 100 receives an operation related to a contract by user A, and communicates with authentication server 310 and others or terminal 200 based on the operation. Terminal 100 also receives information related to a contract from authentication server 310 and others or terminal 200, and presents the information to user A by a display on a screen or sound. Terminal 100 is a smartphone, a tablet, or a personal computer, for example.

Terminal 200 is an information terminal owned by user B. Terminal 200 receives an operation related to a contract by user B, and communicates with authentication server 310 and others or terminal 100 based on the operation. Terminal 200 also receives information related to a contract from authentication server 310 and others or terminal 100, and presents the information to user B by a display on a screen or sound. Terminal 200 is a smartphone, a tablet, or a personal computer, for example.

Note that terminals 100 and 200 may communicate with each other not via authentication server 310 and others.

Note that information management system 1 may further include one or both of terminal 100 owned by user A, and terminal 200 owned by user B.

Now, processing of information management system 1 and terminals 100 and 200 in the following cases will be described as an example. Information management system 1 manages information related to a sales contract between users A and B in a distributed ledger. Here, user A is a seller who sells a product to unspecified people, and user B is a purchaser who buys the product sold by user A. Information management system 1 manages information related to the sales contract where user A sells a product to user B upon request for purchase by user B.

FIG. 2 is a block diagram showing a functional configuration of terminal 100, as a functional configuration of a terminal according to a first example of this embodiment.

As shown in FIG. 2, terminal 100 includes contract determiner 101, condition determiner 102, data generator 103, and communicator 104. Functional parts of terminal 100 may be implemented by a central processing unit (CPU) (not shown) of terminal 100 executing predetermined programs using a memory.

Contract determiner 101 is a functional part that determines the details (also referred to as "contract details") of a contract between users A and B, and generates information indicating the contract details. Specifically, contract determiner 101 determines the details of the sales contract between users A and B. The details of the sales contract may include, for example, information (e.g., product number) specifying the product sold by user A to user B, and information such as the number, deadline, delivery destination, and price of the product.

Contract determiner 101 identifies people (also referred to as "contractors") who make a contract. Not all the contractors may be determined at the time of determining the contract details. In this case, contract determiner 101 may generate information identifying at least contractors determined at the time of determining the contract details.

Condition determiner 102 is a functional part that determines a condition related to the reliability of the signature required for user B who is a contract partner of user A. An example condition related to the reliability of the signature required for the contract partner is as follows. The contract partner has a reliability of the signature applied to contract transaction data, which is higher than or equal to a specified value. This case will be described but the condition is not limited thereto. The specified value indicates, for example, a required reliability which is the reliability required for the signature determined by user A, that is, the user (also referred to as a "requesting user") requesting user B who is the contract partner to apply the signature. The reliability will be described later in detail.

Data generator 103 is a functional part that generates contract data indicating the details of a contract between users A and B. Data generator 103 obtains the contract details determined by contract determiner 101, and generates contract data including the contract details. If condition determiner 102 determines the required reliability as the specified value, contract determiner 101 obtains the required reliability, and generates the contract data including the contract details described above and the required reliability. Data generator 103 transmits the generated contract data via communicator 104 to terminal 200.

Assume that the signature of user A is applied to the contract data generated by data generator 103. In this case, data generator 103 generates a signature through calculation on information indicating the contract details, using a signing key of user A, and generates contract data to which the generated signature is applied. In this case, data generator 103 owns the signing key of user A in advance.

Communicator 104 is a communication interface communicatively connected to authentication server 310 and others and terminal 200. Communicator 104 is used to transmit the contract data, for example.

FIG. 3 is a block diagram showing a functional configuration of terminal 200, as a functional configuration of a terminal according to a second example of this embodiment.

As shown in FIG. 3, terminal 200 includes key storage 201, contract information obtainer 202, signature generator 203, transaction generator 204, and communicator 205. Functional parts of terminal 200 may be implemented by a CPU (not shown) of terminal 200 executing predetermined programs using a memory, and by a storage device.

Key storage 201 includes a storage device storing a signing key of user B. Key storage 201 stores a plurality of signing keys of user B. Each of the signing keys of user B is associated with a reliability. Here, the reliability is an index indicating the degree of the reliability of the signing key. The reliability is an index indicating the degree of the reliability of signing key, for example, at three levels. Here, the three levels of the reliability are expressed as follows. "Gold" represents a relatively high reliability, "silver" represents an intermediate reliability, and "bronze" represents a relatively low reliability. A signing key with a gold reliability and a signature generated using this signing key are referred to as a "gold key" and a "gold signature", respectively. A signing key with a silver reliability and a signature generated using this signing key are referred to as a "silver key" and a "silver signature", respectively. A signing key with a bronze reliability and a signature generated using this signing key are referred to as a "bronze key" and a "bronze signature", respectively.

Note that the expression of three levels of the reliability is not limited thereto and may be "high", "middle", and "low" or "3", "2", and "1". The levels of the reliability may be in any number larger than or equal to two.

Note that the reliability associated with each signing key may be determined by various factors. For example, the reliability associated with each signing key may be determined by a person who has generated the signing key. For example, the signing key generated by the user himself/herself, the signing key generated by a reliable organization, the signing key generated by an organization certified by a state, a prefecture, or a local government, the signing key generated by a listed company, and the signing key generated by a generally recognized company may be associated with different reliabilities.

For example, the reliability associated with each signing key may be determined by the degree of the reliability of the user himself/herself. For example, the signing keys of the following users are associated with reliabilities higher than those associated with the signing keys of the non-applicable users. A user who has done a deed (e.g., a donation, fundraising, or volunteer activities) believed to be socially good, a user with a relatively high income, a user with no criminal records.

For example, the reliability associated with each signing key may be determined by an identity verification document submitted by a user when requiring an institution to generate the signing key. For example, the reliability may be determined by which one of a certificate of family register, a resident card, a driver's license, an individual number card, an identity document (ID), a face photo, a health insurance card, and a passport has been submitted.

Note that information identifying the generator of the signing key may be managed such that falsification by the distributed ledger is substantially impossible.

Contract information obtainer 202 is a functional part that obtains information indicating the contract details. Contract information obtainer 202 obtains, as the information indicating the contract details, the contract details included in the contract data transmitted by terminal 100. Contract information obtainer 202 confirms that the obtained contract details are valid. The contract details may be checked by check processing by a computer or made by receiving a result of checking the contract details by a person.

Signature generator 203 is a functional part that generates a signature of user B. Signature generator 203 refers to the contract transaction data generated by transaction generator 204, and generates a signature through calculation on the contract transaction data, using a signing key of user B stored in key storage 201. Signature generator 203 provides transaction generator 204 with the generated signature.

Transaction generator 204 is a functional part that generates contract transaction data indicating the details of the contract based on the contract data. Transaction generator 204 obtains the contract data obtained by contract information obtainer 202, and generates contract transaction data including information included in the contract data. Transaction generator 204 also obtains the signature of user B to be included in the contract transaction data to be generated from signature generator 203, and generates the contract transaction data including the obtained signature. The signature obtained by transaction generator 204 from signature generator 203 is assumed to be generated using a signing key with a reliability higher than or equal to the required reliability included in the contract data. Transaction generator 204 transmits the generated contract transaction data via communicator 205 to authentication server 310 and others.

Communicator 205 is a communication interface communicatively connected to authentication server 310 and others and terminal 100. Communicator 205 is used to receive the contract data and transmit the contract transaction data, for example.

FIG. 4 is a block diagram showing an example functional configuration of authentication server 310 according to this embodiment.

As shown in FIG. 4, authentication server 310 includes ledger storage 301, reliability verifier 302, validity verifier 303, and communicator 304. Functional parts of authentication server 310 may be implemented by a CPU (not shown) of authentication server 310 executing predetermined programs using a memory, and by a storage device.

Ledger storage 301 includes a storage device storing a distributed ledger, and a processor storing contract transaction data in the distributed ledger. Ledger storage 301 obtains contract transaction data whose validity has been verified by validity verifier 303 and whose reliability has been verified by reliability verifier 302. Ledger storage 301 then stores the obtained contract transaction data in the distributed ledger. Ledger storage 301 transmits the contract transaction data described above to an authentication server (i.e., authentication server 320 or 330) different from its own device, and stores the contract transaction data in a distributed ledger stored in the authentication server. The distributed ledger stored in ledger storage 301 stores one or more contract transaction data, and is managed to be hardly falsified using characteristics such as a hash value, which will be described later.

Note that the distributed ledger is a blockchain, for example. This case will be described as an example. Other type of a distributed ledger (e.g., IOTA or Hashgraph) may be employed. Note that the distributed ledger may or may not execute a consensus algorithm (e.g., practical Byzantine fault tolerance (PBFT), Proof of Work (PoW), or Proof of Stake (PoS)) when storing new transaction data. Hyperledger fabric is an example distributed ledger technique executing no consensus algorithm.

Reliability verifier 302 is a functional part that verifies the reliability of the signing key used to generate the signature for the contract transaction data. Reliability verifier 302 obtains the contract transaction data whose validity has been verified by validity verifier 303, which will be described later. Reliability verifier 302 determines whether the reliability of the signing key used to generate the signature applied to the obtained contract transaction data is higher than or equal to the specified value to verify the reliability of the contract transaction data. Assume that the reliability of the signing key is determined to be higher than or equal to the specified value in the determination described above. In this case, reliability verifier 302 provides ledger storage 301 with the contract transaction data and causes ledger storage 301 to store the contract transaction data in a distributed ledger. On the other hand, assume that the reliability of the signing key is determined to be lower than the specified value in the determination described above. In this case, reliability verifier 302 executes invalidation processing to invalidate the contract transaction data. The invalidation processing may include, for example, the following processing. Invalidation information indicating that the contract transaction data is invalid is added to the contract transaction data. The contract transaction data, to which the invalidation information is added, is stored in the distributed ledger. The invalidation processing may also include the processing of discarding the contract transaction data without storing the contract transaction data in the distributed ledger. Note that the "signing key used to generate the signature" will also be referred to as a "signing key for the signature".

Validity verifier 303 is a functional part that verifies the validity of the contract transaction data. Validity verifier 303 receives the contract transaction data transmitted by terminal 200 via communicator 304. Using the signature applied to the received contract transaction data, validity verifier 303 verifies that information included in the contract transaction data is valid, that is, neither falsified nor destroyed. The received contract transaction data includes a required reliability. Validity verifier 303 provides reliability verifier 302 with the contract transaction data whose validity has been verified, that is, whose verification processing has been made successfully.

If the contract transaction data includes the signatures of the two parties of the contractors, users A and B, validity verifier 303 performs verification processing using the respective signatures of the two parties.

Communicator 304 is a communication interface communicatively connected to terminals 100 and 200 and other authentication servers 320 and 330. Communicator 304 is used to transmit or receive the contract transaction data, for example.

Now, example contract data and example contract transaction data will be described.

FIG. 5 illustrates example contract data according to this embodiment.

As shown in FIG. 5, the contract data includes the fields of contractors 1 and 2, contract details, a required reliability, and signatures 1 and 2. The contract data is generated by contract determiner 101.

Contractor 1 is identification information indicating one of the contractors of a contract according to the contract data. Contractor 1 may be any information as long as serving as an identifier that uniquely identifies the contractor. Under a sales contract of a product sold by user A, the seller, user A is determined as one of the contractors at the time of generating the contract data. Contractor 1 includes identification information on user A (indicated as "user A" in FIG. 5).

Contractor 2 is identification information indicating another one of the contractors except for contractor 1 under the contract according to the contract data. Contractor 2 may be any information as long as serving as an identifier that uniquely identifies the contractor. Under the sales contract of the product sold by user A, there are cases where contractor 2 is identified and not identified at the time of generating the contract data. FIG. 5 shows, as an example, the case where contractor 2 is not determined. The information indicating that contractor 2 is not determined is included. If contractor 2 is identified as user B, for example, contractor 2 includes the identification information on user B.

The contract details are the information indicating the details of the sales contract. The contract details may include, for example, information (e.g., a product number) identifying the product for sale, and the information, such as the number, the deadline, the delivery destination, and the price, of the product, for example. The contract details shown in FIG. 5 are as follows. The product number of the product for sale is A001. The number of the product is 100. The deadline is February 1, 2020. The price is 10,000 yen.

The "required reliability" is the reliability of the signing key required for a signature for this contract. The "required reliability" is the reliability of the signing key used to generate a signature of user B required by user A, for example. Gold is the required reliability shown in FIG. 5.

Signature 1 is a signature of one of the contractors under the contract according to the contract data. Under the sales contract of the product sold by user A, user A is determined as one of the contractors at the time of generating the contract data. Applied to signature 1 is thus a gold signature of user A. Note that signature 1 is not essential.

Signature 2 is a signature of another one of the contractors except for contractor 1 under the contract according to the contract data. Like in the above description of contractor 2, under the sales contract of the product sold by user A, there are cases where contractor 2 is determined and not determined at the time of generating the contract data. FIG. 5 shows, as an example, the case where contractor 2 is not determined and signature 2 is not yet applied ("-" in FIG. 5).

FIG. 6 illustrates example contract transaction data according to this embodiment.

As shown in FIG. 6, the contract transaction data includes contractors 1 and 2, contract details, a required reliability, and signatures 1 and 2. The contract transaction data is generated by transaction generator 204.

The contract transaction data includes the fields of contractors 1 and 2, contract details, a required reliability, and signatures 1 and 2. The field of the contract transaction data functions like that of the contract data. However, at the time of generating the contract transaction data, user B is determined as the other of the contractors except for user A. The fields of contractor 2 and signature 2 are different from those of the contract data.

At the time of generating the contract transaction data, both of users A and B are identified. At the time of generating the contract transaction data, contractor 2 is identified as user B. Contractor 2 includes identification information on user B ("user B" in FIG. 6), and signature 2 includes a gold signature of user B.

FIG. 7 is a flowchart showing processing of authentication server 310 according to this embodiment. FIG. 7 shows processing executed when authentication server 310 receives contract transaction data from terminal 200. If authentication server 320 or 330 receives the contract transaction data from terminal 200, the same or similar processing is performed by authentication server 320 or 330.

In step S101 of FIG. 7, validity verifier 303 determines whether contract transaction data has been received. If contract transaction data is determined to have been received (Yes in step S101), the process proceeds to step S102. If not (No in step S101), step S101 is executed again. That is, validity verifier 303 stands by in step S101 until receiving the contract transaction data.

In step S102, validity verifier 303 determines whether the contract transaction data received in step S101 is valid. If the contract transaction data is determined to be valid (Yes in step S102) the process proceeds to step S103. If not (No in step S102), the process proceeds to step S111.

In step S103, reliability verifier 302 determines whether the reliability of the signing key, which is used to generate the signature applied to the contract transaction data determined to be valid in step S102, is higher than or equal to a specified value. If the reliability of the signing key is determined to be higher than or equal to the specified value (Yes in step S103), the process proceed to step S104. If not (No in step S103), the process proceeds to step S121.

In step S104, ledger storage 301 stores, in the distributed ledger, the contract transaction data applied with the signing key whose reliability is determined to be higher than or equal to the specified value in step S103. Ledger storage 301 also stores the contract transaction data described above in a distributed ledger of another authentication server. When storing the contract transaction data in each distributed ledger, a consensus algorithm may or may not be executed.

In step S111, reliability verifier 302 discards the contract transaction data which has been determined to be invalid in step S102.

In step S112, reliability verifier 302 performs error processing in relation to the discard of the contract transaction data in step Sill. The error processing includes, for example, processing of adding information indicating the discard of the contract transaction data to the log of authentication server 310. Note that step S112 may not be executed.

In step S121, reliability verifier 302 executes invalidation processing of the contract transaction data which has been determined to be invalid in step S103.

Assume that invalidation information is added to the contract transaction data in the invalidation processing in step S121. In this case, in step S122, ledger storage 301 stores the contract transaction data, to which the invalidation information is added, in the distributed ledger. The execution of the consensus algorithm is the same as in step S104.

FIG. 8 is a sequence diagram showing processing of information management system 1 according to this embodiment. FIG. 8 shows processing executed when authentication server 310 receives contract transaction data from terminal 200. Even when authentication server 320 or 330 receives the contract transaction data from terminal 200, the same or similar processing is executed. In the processing of authentication server 310, the same reference signs as those shown in FIG. 7 are used to represent equivalent elements, and the detailed explanation thereof may be omitted.

In step S201, data generator 103 of terminal 100 generates contract data. The generated contract data includes a required reliability.

In step S202, data generator 103 of terminal 100 transmits the contract data generated in step S201 to terminal 200. Contract information obtainer 202 of terminal 200 receives the transmitted contract data.

In step S203, contract information obtainer 202 of terminal 200 confirms that contract details included in the contract data received in step S202 are valid.

In step S204, signature generator 203 of terminal 200 generates a signature to be applied to the contract transaction data to be generated by transaction generator 204, using a signing key of user B. Here, signature generator 203 generates a gold signature, using a gold key of user B.

In step S205, transaction generator 204 of terminal 200 generates contract transaction data to which the signature generated in step S204 is applied.

In step S206, transaction generator 204 of terminal 200 transmits the contract transaction data generated in step S205 to authentication server 310.

Authentication server 310 receives the contract transaction data transmitted in step S206. After verifying the validity using validity verifier 303 and the reliability using reliability verifier 302, authentication server 310 stores the contract transaction data in the distributed ledge (steps S101 to S104).

With the series of processing described above, information management system 1 manages information in the distributed ledger at a higher reliability.

In the above description, the specified value of the reliability of the signature under the condition related to the reliability of the signature required by condition determiner 102 may be determined in advance in information management system 1. In this case, the specified value of the reliability may indicate the reliability determined in advance in accordance with the content of the contract transaction data. In this case, condition determiner 102 determines the condition described above using the reliability determined in advance in information management system 1 in accordance with the content of the contract transaction data. In this case, there is no need for the contract data generated by data generator 103 to include any required reliability.

### [Variation of Embodiment 1]

Described in this variation will be an information management system that manages information in a distributed ledger at a higher reliability, and a control method, for example, of the system according to a variation different from Embodiment 1. The information management system according to this variation uses contract transaction data in place of contract data, when transmitting the contract details from terminal 100 to terminal 200.

FIG. 9 is a sequence diagram showing processing of information management system 1A according to this variation. In the processing of information management system 1A, the same reference signs as those shown in FIG. 8 are used to represent equivalent elements, and the detailed explanation thereof may be omitted.

In step S211, data generator 103 of terminal 100 generates contract transaction data indicating the details of a contract between users A and B. The contract transaction data is generated by data generator 103 in place of the contract data according to Embodiment 1. The content of the contract transaction data is the same or similar to that of the contract data according to Embodiment 1 (see FIG. 5).

In step S212, data generator 103 transmits the generated contract transaction data via communicator 104 to authentication server 310. Ledger storage 301 of authentication server 310 receives the transmitted contract transaction data.

In step S213, authentication server 310 stores, in the distributed ledger, the contract transaction data received in step S212. When storing the contract data in the distributed ledger, a consensus algorithm may or may not be executed.

In step S214, contract information obtainer 202 of terminal 200 transmits, to authentication server 310, a request for contract transaction data. Ledger storage 301 of authentication server 310 receives the request for contract transaction data.

In step S215, ledger storage 301 of authentication server 310 transmits the contract transaction data to terminal 200 upon receipt of the request. Contract information obtainer 202 of terminal 200 receives the transmitted contract transaction data.

After that, terminal 200 checks the contract details included in the received contract transaction data. Based on the contract details, terminal 200 generates contract transaction data to which a signature is applied. Terminal 200 then transmits the generated contract transaction data to authentication server 310 and causes authentication server 310 to store the generated contract transaction data in a distributed ledger (steps S203 to S104)

With the series of processing described above, information management system 1A manages information in the distributed ledger at a higher reliability.

### (Embodiment 2)

Described in this embodiment will be an information management system that manages information in a distributed ledger at a higher reliability, and a control method, for example, of the system according to an embodiment different from Embodiment 1.

The information management system, and terminals 100 and 200 and authentication servers 310, 320, and 330 of the information management system in this embodiment are almost the same as those in Embodiment 1. In place of a reliability, attributes associated with a signing key are used.

Terminal 100 according to this embodiment will be described.

Terminal 100 according to this embodiment is the same or similar to terminal 100 according to Embodiment 1. However, condition determiner 102 and data generator 103 are different from those of terminal 100 according to Embodiment 1.

Condition determiner 102 determines a condition related to attributes of a signature required for user B who is a contract partner of user A. An example condition related to the attributes of the signature required for the contract partner is as follows. The contract partner has attributes of the signature applied to contract transaction data and including at least one of specified attributes. This case will be described but the condition is not limited thereto. The attributes include, for example, a required attribute which is the attribute required for the signature determined by user A, that is, the user (also referred to as a "requesting user") requesting user B who is the contract partner to apply the signature. The attributes will be described later in detail.

Data generator 103 generates contract data indicating the details of a contract between users A and B. Data generator 103 obtains the contract details determined by contract determiner 101, and generates contract data including the contract details. If condition determiner 102 determines the required attribute, as one of the specified attributes, contract determiner 101 obtains the required attribute, and generates the contract data including the contract details described above and the required attribute. Data generator 103 transmits the generated contract data via communicator 104 to terminal 200.

Terminal 200 according to this embodiment will be described.

Terminal 200 according to this embodiment is the same or similar to terminal 200 according to Embodiment 1. However, key storage 201 and signature generator 203 are different from those of terminal 100 according to Embodiment 1.

Key storage 201 includes a storage device storing a signing key of user B. Key storage 201 stores a plurality of signing keys of user B. Each of the signing keys of user B is associated with an attribute. Here, the attribute is an index indicating the characteristics or the nature of user B. The attribute is the nationality, address, age, gender, income, debt, or criminal records, for example.

Signature generator 203 is a functional part that generates a signature of user B. Signature generator 203 refers to the contract transaction data generated by transaction generator 204, and generates a signature through calculation on the contract transaction data, using a signing key of user B stored in key storage 201. Signature generator 203 provides transaction generator 204 with the generated signature.

Authentication server 310A according to this embodiment will be described.

FIG. 10 is a block diagram showing an example of the functional configuration of authentication server 310A according to this embodiment.

As shown in FIG. 10, authentication server 310A includes ledger storage 301, attribute verifier 302A, validity verifier 303, and communicator 304. Functional parts of authentication server 310A may be implemented by a CPU (not shown) of authentication server 310A executing predetermined programs using a memory, and by a storage device.

Ledger storage 301 is the same as in authentication server 310 according to Embodiment 1.

Attribute verifier 302A is a functional part that verifies the attributes of the signing key used to generate a signature of contract transaction data. Attribute verifier 302A obtains contract transaction data whose validity has been verified by validity verifier 303, which will be described later. Attribute verifier 302A determines whether the attributes (also simply referred to as "attributes of the contract transaction data") associated with the signing key used to generate the signature applied to the obtained contract transaction data include at least one of the specified attributes. Accordingly, attribute verifier 302A verifies the attributes of the contract transaction data.

Assume that the attributes of the contract transaction data are determined to include at least one of the specified attributes in the determination described above. In this case, attribute verifier 302A provides ledger storage 301 with the contract transaction data and causes ledger storage 301 to store the contract transaction data in a distributed ledger. On the other hand, assume that the attributes of the contract transaction data are determined not to include at least one of the specified attributes in the determination described above. In this case, attribute verifier 302A executes invalidation processing to invalidate the contract transaction data. The invalidation processing is the same or similar to that in Embodiment 1.

In the determination of attribute verifier 302A, "all the specified attributes" may be used as "at least one of the specified attributes". Specifically, attribute verifier 302A may determine whether the attributes of the signing key used to generate the signature applied to the obtained contract transaction data includes all the specified attributes to verify the attributes of the contract transaction data. Assume that the attributes of the contract transaction data are determined to include all the specified attributes in the determination described above. In this case, attribute verifier 302A provides ledger storage 301 with the contract transaction data and causes ledger storage 301 to store the contract transaction data in the distributed ledger. On the other hand, assume that the attributes of the contract transaction data are determined not to include all the specified attributes in the determination described above. In this case, attribute verifier 302A executes invalidation processing to invalidate the contract transaction data.

Validity verifier 303 is the same or similar to validity verifier 303 according to Embodiment 1. The contract transaction data received by validity verifier 303 includes required attributes. Validity verifier 303 provides attribute verifier 302A with the contract transaction data whose validity has been verified, that is, whose verification processing has been made successfully.

If the contract transaction data includes the signatures of the two parties of the contractors, users A and B, validity verifier 303 performs verification processing using the respective signatures of the two parties.

FIG. 11 illustrates example contract data according to this embodiment.

As shown in FIG. 11, the contract data includes the fields of contractors 1 and 2, contract details, required attributes, and signatures 1 and 2. The contract data is generated by contract determiner 101. The fields included in the contract data except for the required attributes and signatures 1 and 2 are the same as in Embodiment 1 and the description thereof will thus be omitted.

The "required attributes" are the attributes of the signing key required for this contract. The "required attributes" are the attributes of the signing key used to generate a signature of user B required by user A, for example. The required attributes shown in FIG. 11 are as follows. The attribute related to the nationality is "Japan". The attribute related to the age is "thirties". The attribute related to the gender is "male".

Signature 1 is a signature of one of the contractors under the contract according to the contract data. Under a sales contract of a product sold by user A, user A is determined as one of the contractors at the time of generating the contract data. Applied to signature 1 is signature S of user A. The signing key (also referred to as a "signing key for signature S" used to generate signature S is associated with the following attributes. The attribute related to the nationality is "Japan". The attribute related to the age is "thirties". The attribute related to the gender is "male".

Signature 2 is a signature of another one of the contractors except for contractor 1 under the contract according to the contract data. FIG. 11 shows an example where contractor 2 is not determined and signature 2 is not yet applied.

FIG. 12 illustrates example contract transaction data according to this embodiment.

As shown in FIG. 12, the contract transaction data includes the fields of contractors 1 and 2, contract details, required attributes, and signatures 1 and 2. The contract transaction data is generated by transaction generator 204. The fields included in the contract data except for the fields of the required attributes are the same as in Embodiment 1 and the description thereof will thus be omitted. The fields of the required attributes are the same as of the contract data and the description thereof will thus be omitted.

At the time of generating the contract transaction data, user B is determined as the other of the contractors except for user A. The fields of contractor 2 and signature 2 are different from those of the contract data.

At the time of generating the contract transaction data, both of users A and B are identified. At the time of generating the contract transaction data, contractor 2 is identified as user B. Contractor 2 includes identification information on user B, and signature 2 includes signature T of user B. The signing key (also referred to as a "signing key for signature T" used to generate signature T is associated with the following attributes. The attribute related to the nationality is "Japan". The attribute related to the age is "thirties". The attribute related to the gender is "male".

FIG. 13 is a flowchart showing processing of authentication server 310A according to this embodiment.

The processing shown in FIG. 13 other than step S103A is the same as in Embodiment 1.

In step S103A, attribute verifier 302A determines whether the attributes of the signing key, which is used to generate the signature applied to the contract transaction data determined to be valid in step S102, include at least one of specified attributes. If the attributes of the signing key are determined to include at least one of the specified attributes (Yes in step S103A), the process proceeds to step S104. If not (No in step S103A), the process proceeds to step S121.

The processing of the information management system according to this embodiment can be described with step S103 of the processing (FIG. 8) of information management system 1 according to Embodiment 1 replaced with step S103A in FIG. 13. Detailed description will be omitted.

With the series of the processing shown in FIG. 13, the information management system manages information in the distributed ledger at a higher reliability.

In the above description, the specified attributes of the signature under the condition related to the attribute of the signature required by condition determiner 102 may be determined in advance in the information management system. In this case, the specified attributes may be determined in advance in accordance with the content of the contract transaction data. In this case, condition determiner 102 determines the condition described above using the attributes determined in advance in the information management system in accordance with the content of the contract transaction data. In this case, there is no need for the contract data generated by data generator 103 to include any required attribute.

A single attribute value is set as a required attribute in each item. A plurality of attribute values may be set as a required attribute in each item. In this case, attribute verifier 302A determines whether the attribute of the signing key used to generate the signature applied to the contract transaction data includes at least one of the attribute values of each specified attribute. For example, assume that the attribute related to the nationality included in the required attributes is "Japan" or "US". In each case where the attribute related to the nationality and associated with the signing key is "Japan" or "US", the attribute of the signing key may be determined to include a specified attribute.

A condition of attribute values of a plurality of attributes in combination may be set as required attributes. For example, a condition of attributes related to the nationality and the age in combination may be set as follows. The nationality is "Japan" and the age is within the "thirties", or the nationality is "US" and the age is within the "forties". In this case, attribute verifier 302A determines that the attributes of the signing key include specified attributes, when the condition of the attribute values of the attributes in combination is met.

### (Supplementary Description)

The blockchain in the embodiments or variation will be described supplementarily.

FIG. 14 illustrates a data structure of the blockchain.

The blockchain is obtained by connecting blocks, which are recording units, in a chain. Each block includes a plurality of transaction data and the hash value of a block immediately before the block. Specifically, block B2 includes the hash value of block B1 immediately before block B2. The hash value calculated from the plurality of transaction data included in block B2 and the hash value of block B1 are included as the hash value of block B2 in block B3. In this manner, the blocks are connected in a chain, while including the contents of the previous blocks as hash values, to effectively reduce the falsification of the recorded transaction data.

If past transaction data is changed, the hash value of a block is different from that before the change. In order to make the falsified block look like the correct one, there is a need to recreate all the subsequent blocks. This work is practically extremely difficult. With this feature, the difficulty in the falsification of the blockchain is ensured.

FIG. 15 illustrates a data structure of transaction data.

The transaction data shown in FIG. 15 includes transaction body P1 and electronic signature P2. Transaction body P1 is the data body included in the transaction data. Electronic signature P2 is generated by signing the hash value of transaction body P1 using a signing key of the generator of the transaction data, more specifically, through encryption with a private key of the generator.

The transaction data includes electronic signature P2. Falsification is thus substantially impossible. Accordingly, the transaction body is not or less falsified.

In the embodiment described above, the constituent elements may be dedicated hardware or may be implemented by executing software programs suitable for the constituent elements. The constituent elements may be implemented by a program executor such as a CPU or a processor reading and executing software programs recorded in a recoding medium such as a hard disk or a semiconductor memory. Here, the software achieving the content management system, for example, according to the embodiments described above is the following program.

Specifically, this program causes a computer to execute a control method. The control method is to be executed by one of a plurality of servers included in an information management system. Each of the plurality of servers owns a distributed ledger. The control method includes: receiving transaction data including a signature generated using any signing key of a plurality of signing keys owned by a user, each of the plurality of signing keys being associated with a reliability; determining whether the reliability associated with the signing key used to generate the signature included in the transaction data received is higher than or equal to a specified value; storing the transaction data in the distributed ledger, if the reliability is determined to be higher than or equal to the specified value in the determining; and executing invalidation processing to invalidate the transaction data, if the reliability is determined to be lower than the specified value in the determining.

The information management system, for example, according to one or more aspects has been described above based on the embodiments. The present invention is not limited to these embodiments. The one or more aspects may include forms obtained by various modifications to the foregoing embodiments that can be conceived by those skilled in the art or forms achieved by freely combining the constituent elements and functions in the foregoing embodiments without departing from the scope and spirit of the present invention.

### [Industrial Applicability]

The present invention is applicable to an information management system that manages various information.

### [Reference Signs List]

- 1, 1A: information management system
- 100, 200: terminal
- 101: contract determiner
- 102: condition determiner
- 103: data generator
- 104, 205, 304: communicator
- 201: key storage
- 202: contract information obtainer
- 203: signature generator
- 204: transaction generator
- 301: ledger storage
- 302: reliability verifier
- 302A: attribute verifier
- 303: validity verifier
- 310, 310A, 320, 330: authentication server
- A, B: user
- B1, B2, B3: block
- P1: transaction body
- P2: electronic signature

## Claims

1. A control method to be executed by one of a plurality of servers included in an information management system, each of the plurality of servers owning a distributed ledger, the control method comprising:
receiving transaction data including a signature generated using any signing key of a plurality of signing keys owned by a user, each of the plurality of signing keys being associated with a reliability;
determining whether the reliability associated with the signing key used to generate the signature included in the transaction data received is higher than or equal to a specified value;
storing the transaction data in the distributed ledger, if the reliability is determined to be higher than or equal to the specified value in the determining; and
executing invalidation processing to invalidate the transaction data, if the reliability is determined to be lower than the specified value in the determining.

2. The control method according to claim 1, wherein
the specified value indicates a required reliability that is a reliability required for the signing key used to generate the signature and determined by a requesting user who is another user requesting the user to apply a signature, and
the transaction data further includes the required reliability.

3. The control method according to claim 1, wherein
the specified value indicates a reliability determined in advance in accordance with a content of the transaction data.

4. The control method according to any one of claims 1 to 3, wherein
the invalidation processing includes processing of adding invalidation information indicating that the transaction data is invalid to the transaction data, and storing, in the distributed ledger, the transaction data to which the invalidation information is added.

5. The control method according to any one of claims 1 to 3, wherein
the invalidation processing includes processing of discarding the transaction data without storing the transaction data in the distributed ledger.

6. The control method according to any one of claims 1 to 5, wherein
when the transaction data has been received,
verification processing of the transaction data is executed using the signature included in the transaction data received, and the determining is performed when verification has been successfully made in the verification processing.

7. The control method according to claim 2, wherein
the transaction data further includes a signature of the requesting user, and
when the transaction data has been received,
verification processing of the transaction data is executed using the signature of the requesting user and the signature of the user included in the transaction data received, and the determining is performed when verification has been successfully made in the verification processing.

8. A control method to be executed by one of a plurality of servers included in an authentication system, each of the plurality of servers owning a distributed ledger, the control method comprising:
receiving transaction data including a signature generated using a signing key owned by a user and associated with one or more attributes;
determining whether the one or more attributes associated with the signing key used to generate the signature included in the transaction data received include at least one of one or more predetermined specified attributes;
storing the transaction data in the distributed ledger, if the one or more attributes are determined to include the at least one of the one or more predetermined specified attributes in the determining; and
executing invalidation processing to invalidate the transaction data, if the one or more attributes are determined not to include the at least one of the one or more predetermined specified attributes in the determining.

9. The control method according to claim 8, wherein
the determining includes:
determining whether the one or more attributes associated with the signing key used to generate the signature included in the transaction data received include all the one or more predetermined specified attributes;
storing the transaction data in the distributed ledger, if the one or more attributes are determined to include all the one or more predetermined specified attributes; and
executing invalidation processing to invalidate the transaction data, if the one or more attributes are determined not to include all the one or more predetermined specified attributes.

10. The control method according to claim 8 or 9, wherein
the one or more predetermined specified attributes include a required attribute that is an attribute required for the signature and determined by a requesting user who is another user requesting the user to apply a signature, and
the transaction data further includes the required attribute.

11. The control method according to any one of claims 8 to 10, wherein
the one or more predetermined specified attributes include an attribute determined in advance in accordance with a content of the transaction data.

12. The control method according to any one of claims 8 to 11, wherein
the invalidation processing includes processing of adding invalidation information indicating that the transaction data is invalid to the transaction data, and storing, in the distributed ledger, the transaction data to which the invalidation information is added.

13. The control method according to any one of claims 8 to 11, wherein
the invalidation processing includes processing of discarding the transaction data without storing the transaction data in the distributed ledger.

14. The control method according to any one of claims 8 to 13, wherein
when the transaction data has been received,
verification processing of the transaction data is executed using the signature included in the transaction data received, and the determining is performed when verification has been successfully made in the verification processing.

15. The control method according to claim 10, wherein
the transaction data further includes a signature of the requesting user, and
when the transaction data has been received,
verification processing of the transaction data is executed using the signature of the requesting user and the signature of the user included in the transaction data received, and the determining is performed when verification has been successfully made in the verification processing.

16. A server being one of a plurality of servers included in an authentication system, each of the plurality of servers owning a distributed ledger, the server comprising:
a ledger storage that stores the distributed ledger; and
a reliability verifier, wherein
the reliability verifier:
receives transaction data including a signature generated using any signing key of a plurality of signing keys owned by a user, each of the plurality of signing keys being associated with a reliability;
determines whether the reliability associated with the signing key used to generate the signature included in the transaction data received is higher than or equal to a specified value;
stores the transaction data in the distributed ledger, if the reliability is determined to be higher than or equal to the specified value in the determining; and
executes invalidation processing to invalidate the transaction data, if the reliability is determined to be lower than the specified value in the determining.

17. A server being one of a plurality of servers included in an information management system, each of the plurality of servers owning a distributed ledger, the server comprising:
a ledger storage that stores the distributed ledger; and
an attribute verifier, wherein
the attribute verifier:
receives transaction data including a signature generated using a signing key owned by a user and associated with one or more attributes;
determines whether the one or more attributes associated with the signing key used to generate the signature included in the transaction data received include at least one of one or more predetermined specified attributes;
stores the transaction data in the distributed ledger, if the one or more attributes are determined to include the at least one of the one or more predetermined specified attributes in the determining; and
executes invalidation processing to invalidate the transaction data, if the one or more attributes are determined not to include the at least one of the one or more predetermined specified attributes in the determining.

18. A program that causes a computer to execute the control method according to any one of claims 1 to 15.
